# EUROPEAN PATENT APPLICATION

(11) **EP 4 394 358 A1**
(43) Date of publication of application: **03.07.2024**
(21) Application number: 23220863.7
(22) Date of filing: 29.12.2023
(51) Int. Cl.: G01N 21/3563, G01N 21/03, G01N 21/27, G01N 21/68

(54) **A REACTOR FOR PERFORMING SPECTROSCOPIC STUDIES**

(30) Priority: 30.12.2022 PL 44334722
(71) Applicant: UNIWERSYTET JAGIELLONSKI, 31-007 Kraków (PL); MEASLINE SPOLKA Z OGRANICZONA ODPOWIEDZIALNOSCIA, 31-417 Krakow (PL)
(72) Inventor: Gora-Marek, Kinga, 31-236 Krakow (PL); Tarach, Karolina, 30-389 Krakow (PL); Budzioch, Pawel, 34-122 Wieprz (PL)
(74) Representative: Kancelaria Eupatent.pl Sp. z.o.o

(57) **Abstract**

A reactor for performing spectroscopic studies, the reactor comprising: a chamber (10) configured to receive a sample (P) to be studied and electrodes (21 - 24) for generating low-temperature plasma from plasma-generating gas within the interior (11) of the chamber (10). The chamber (10) comprises an interior (11) surrounded by walls (11a) having transmission windows (13a, 13b) for transmitting electromagnetic radiation through the chamber (10), an inlet port (41) for introducing plasma-generating gas into the interior (11) of the chamber (10), an outlet port (42) for removing substances from the interior (11) of the chamber (10) and creating a vacuum within the interior (11) of the chamber (10), and ports (31, 32) for supplying cooling water to the chamber sealers. The electrodes (21 - 24) are connected to an AC power supply to generate an alternating voltage between the electrodes, wherein each electrode (21 - 24) is separated from the interior (11) of the chamber (10) by a wall (11a) of the chamber (10) made of quartz (SiO₂).

## Description

### TECHNICAL FIELD

The present invention relates to a reactor for performing spectroscopic studies. The reactor can be used to study matter, particularly matter undergoing chemical reactions (in situ and operando modes), using spectroscopic techniques such as infrared spectroscopy.

### BACKGROUND

Infrared spectroscopy is a versatile, non-destructive method used to identify the molecular structure of a material under study. An infrared spectroscopic study of phenomena occurring on the surface of a material under chemical reaction conditions provides both qualitative and quantitative information about the nature of the surface centers. These centers interact with the reactant molecules which results in the subsequent transformation of the latter into the desired products. Quantitative infrared studies allow for determining the concentration of the centers responsible for the course of a specific type of reaction. Such studies can only be conducted in a transmission mode, where radiation passing through the sample is analyzed. However, the currently available spectroscopic studying apparatus have several limitations, including a narrow temperature range for reactor operation, often the inability to conduct experiments under both vacuum and reagent flow conditions, and the fact that the reactor material (metal, polymer) releases substances that interact with the sample under study.

There are known microreactors for the spectroscopic study of chemical reactions for studying the course of the reaction under controlled conditions, i.e. at a certain temperature and pressure, in the presence of an inert or a reactive gas atmosphere. For the investigation of chemical reaction networks, identifying all relevant intermediates, their mutual transformations, and elementary reactions is mandatory. These reactors use radiation, such as infrared (IR) or visible (VIS) radiation, to irradiate the reaction chamber during the reaction to obtain spectra, usually recorded in transmission mode. The absorption bands corresponding to the formation of the products of a given reaction can give qualitative information on the reaction studied. These reactors are used to monitor various reactions, including homogeneous catalysis, heterogeneous catalysis, biochemical reactions, and electrochemistry.

There are known various reactors for spectroscopic studies that differ in design and principle of operation. A Polish patent, PL232633 refers to a reactor for spectroscopic studies of matter, including products of chemical reactions, using infrared radiation in transmission mode. This reactor consists of a tube-shaped reaction chamber equipped with inlet and outlet ports for feeding various reactants and/or inerts into the chamber and removing reaction products from the chamber. The reactor includes a heating and cooling system and a thermocouple to control the temperature in the chamber during the reaction and spectroscopic study. The design of the reactor allows the spectroscopic study of solid samples in transmission mode, thus in quantitative mode, under reaction conditions under controlled temperature and atmospheric conditions.

A US patent US3840750, refers to a reactor for the synthesis and modification of materials. This reactor has a plasma generator with electrodes. The design of the reactor allows for the introduction of materials to be modified under the influence of the plasma into the reaction chamber, enabling material processing under plasma conditions. However, the plasma generator installed in the reactor only allows for the generation of plasma with DC voltage, and the electrodes for plasma generation are installed directly in the area where the plasma is generated. As a result, the manufactured plasma may be partially contaminated with electrode material, which, along with the plasma stream, may enter the reaction chamber and contaminate the reactants. This document does not indicate the possibility of conducting spectroscopic studies during chemical reactions carried out in this reactor.

### SUMMARY OF THE INVENTION

As can be seen from the prior art solutions discussed above, the techniques in which transmission spectroscopy is used to analyze matter while undergoing chemical reactions are subject to continuous modifications aimed at providing devices for these studies (reactors), the design of which would enable reactions to be carried out under varied process conditions, in particular, to carry out spectroscopic studies of reactions occurring in the presence of, or initiated by, plasma, under various conditions of pressure and temperature. It is therefore advisable to develop a reactor for IR spectroscopic research without the disadvantages discussed above, in particular enabling spectroscopic insight into chemical reactions using low-temperature plasma utterly free from contamination with the electrode material.

In one aspect, the invention relates to a reactor for spectroscopic performing spectroscopic studies, comprising a chamber configured to receive a sample (P) to be studied and electrodes for generating low-temperature plasma from plasma-generating gas within the interior of the chamber. The chamber comprises: an interior surrounded by walls having transmission windows for transmitting electromagnetic radiation through the chamber, an inlet port for introducing plasma-generating gas into the interior of the chamber, an outlet port for removing substances from the interior of the chamber and creating a vacuum within the interior of the chamber, and ports for supplying cooling water to the chamber sealers. The electrodes are connected to an AC power supply to generate an alternating voltage between the electrodes, wherein each electrode is separated from the interior of the chamber by a wall of the chamber made of quartz (SiO₂).

This reactor design enables the generation of low-temperature plasma directly in the reactor chamber, at a reduced pressure between 1 and 1·10⁻² mbar, directly inside the reactor chamber, at virtually any temperature, preferably between 100 to 1000K. This eliminates the need to interrupt the heating of the reactor chamber or the process of contacting the sample material with other substances, such as a stream of gaseous reactants fed to or passed through the reactor chamber, during the stage of low-temperature plasma treatment, provided that adequate pressure is maintained inside the chamber. This allows control of the atmosphere inside the chamber during the chemical reactions, and monitoring reaction products throughout the entire period of spectroscopic study, without the need for airing the apparatus, which could potentially deactivate or even destroy the material under study.

The compact design of the reactor ensures that plasma generation occurs in an area (inside the reactor chamber) that is not in direct contact with the electrode material, thereby eliminating the risk of contaminating the matter inside the chamber with electrode material carried by the plasma, while maintaining the relatively small dimensions of the entire device. Consequently, the material under study, typically a small mass sample ranging from several to tens of milligrams, up to a maximum of 40 mg, is not contaminated with the said electrode material. It should be noted that even trace amounts of contamination with electrode material could significantly impact the study result, providing unreliable data.

Preferably, the electrodes comprise a pair of lateral electrodes for generating low-temperature plasma, wherein each of the lateral electrodes is installed in a shield and connected to an AC power supply via its galvanically isolated outputs. The plasma generated by the lateral electrodes is produced in the area surrounding the sample and the openings of the fillers. The openings of the lateral fillers 12a should have a diameter of not less than 5 mm, and the opening of the central filler 12b should be as large as possible.

Preferably, the electrodes comprise a pair of axial electrodes for generating a low-temperature plasma, wherein the first axial electrode is a rod and is connected to an AC power supply through its high-voltage output, and the second axial electrode is a plate and is connected to the AC power supply through its grounded output. The plasma generated with the axial electrodes is primarily produced in the immediate vicinity of the sample. The openings of the side fillers can be of any diameter, and the opening of the center filler should be as large as possible.

Preferably, the reactor comprising two lateral electrodes and one axial electrode for generating low-temperature plasma. The plasma generated by these three electrodes ensures the symmetry of the generated plasma, wherein the openings of the lateral fillers should have a diameter of not less than 5 mm, and the opening of the central filler can be as large as possible.

Preferably, the chamber is a tube terminated on two sides by transmission windows. This design allows for the transmission of electromagnetic radiation during spectroscopic study through essentially the entire volume of the chamber, enabling more comprehensive spectra of the matter inside the chamber to be obtained.

Preferably, the chamber is a tube with a center filler and side fillers in the form of quartz tubes coaxially installed. The fillers fixed in the chamber allow for the adjustment (reduction) of the chamber's volume, depending on the process needs.

Preferably, the reactor further comprises a heating system for heating the interior of the chamber, comprising a heater arranged substantially around the chamber and a cooling system for cooling the interior of the chamber in the form of a cooling jacket, which is arranged substantially around the chamber of the reactor. Preferably, the reactor further comprises a thermocouple for measuring the temperature in the interior of the chamber during its heating and/or cooling.

These and other features, aspects and advantages of the invention will become better understood concerning the following drawings, descriptions and claims.

### BRIEF DESCRIPTION OF DRAWINGS

The object of the invention is shown using exemplary embodiment in a drawing, wherein:
Fig. 1 shows a longitudinal cross-section of an example embodiment of a reactor for spectroscopic studies;
Fig. 2 shows a cross-section of the example embodiment of the reactor.

### DETAILED DESCRIPTION

The following detailed description is of the best currently contemplated modes of carrying out the invention. The description is not to be taken in a limiting sense but is made merely to illustrate the general principles of the invention.

According to the invention, the spectroscopic reactor is particularly suitable for infrared (IR) spectroscopic studies conducted in transmission mode, and for integration with mass spectroscopy, including association with chromatography.

The low-temperature plasma generated in the reactor may be used, for example, for activation of the sample material, effective purification (regeneration) of the sample - under conditions adapted to the study, or to study the effect of ionization of reactive gases on the reaction process of the sample with various reactants, according to the needs of the study in progress.

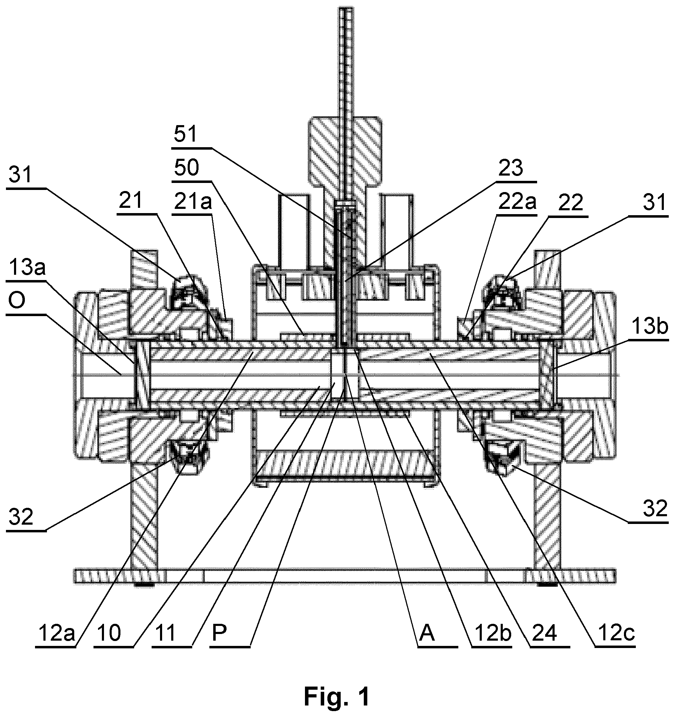

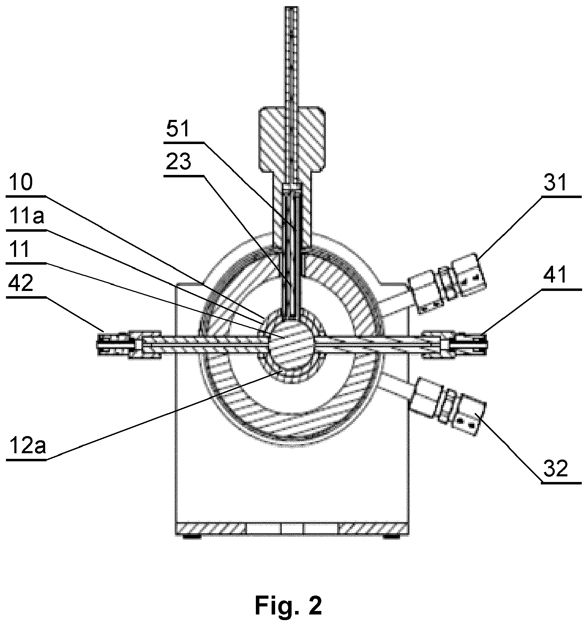

As shown in Fig. 1 and Fig. 2, the reactor, made in the form of a cylinder, comprises chamber 10, which has quartz (SiO₂) walls 11a separating the interior 11 of the chamber 10 from the surroundings. The chamber 10 is closed on both sides by optical transmission windows 13a, 13b adapted to transmit electromagnetic radiation through the interior 11 of the chamber 10 (e.g., transmission of infrared (IR) radiation - for recording IR spectra), in order to perform a spectroscopic study of the material of the sample P - placed in the chamber 10 for the duration of the study. Advantageously, the chamber 10 is in the form of an O-axis quartz tube, which is terminated on two sides by transmission windows - one transmission window 13a inlet and the other transmission window 13b outlet, which makes it possible to realize a spectroscopic study in transmission mode, in which the radiation beam is passed through the chamber preferably along the O-axis.

A sample material P is placed within the interior 11 of the chamber 10, preferably at or near its geometric center A, for the duration of the study so that the beam of electromagnetic radiation reaches the sample material P. Preferably, the sample P has a small mass, typically from a dozen to 40 milligrams.

The chamber 10 may have attached fillers 12a, 12b, 12c in the form of quartz (SiO₂) tubes suitably selected wall thickness, which are mounted in the chamber 10 (shaped like a tube) coaxially, sliding inward. A center filler 12b is placed around the geometric center A of the chamber 10, i.e. in the place for the sample P, while side fillers 12a, 12c with a wall thickness greater than that of the center filler 12b are placed on both sides of it. Filler 12b with a small wall thickness reduces the dead volume of the chamber 10 to a small extent, so it is placed directly next to the sample, wherein the generated plasma or other reactants or inerts introduced into the interior 11 of the chamber 10 may contact as large a surface area of the sample P. In contrast, side fillers 12a and 12c with thicker walls are used in sections of the chamber distanced from the geometric center A of the chamber. This may minimize the dead volume of the interior 11 of the chamber 10. The use of fillers 12a, 12b, and 12c is optional - depending on the needs of a particular study.

The chamber 10 comprises at least one inlet port 41 for introducing plasma-forming gas into the interior 11 of the chamber - for generating low-temperature plasma inside the interior 11 of the chamber 10, between the electrodes, for example, plasma-forming gases such as noble gases, reactive gases and the like. Other reactants and/or gas inerts, for example, Ne, Ar, Kr, etc., may be introduced inside the chamber through the inlet port 41, depending on process needs.

For example, individual reactants or inerts may be introduced into the interior 11 of the chamber 10 via the inlet port 41, in order to maintain the respective shares of the substances in question in the chamber 10, at a given time of study. Optionally, a single inlet port 41 may be used to introduce various gases into the chamber 10, in a preset sequence: plasma-forming gas, gaseous reactants and/or gaseous inerts - depending on process needs.

The chamber 10 further comprises an outlet port 42 for removing from the interior 11 substances, including gases introduced into the chamber by the inlet port 41. The outlet port 42 is further designed for connecting to the chamber 10 a vacuum pump, for example, by means of a Teflon hose. For example, the vacuum pump may be an oil-free pump. The vacuum pump is used to generate and maintain in the interior 11 a reduced pressure preferably between 1·10⁻¹ and 1·10⁻² mbar, particularly for the time of generating in the interior 11 of the chamber 10 a low-temperature plasma. Thus, a suitable negative pressure may be maintained in the interior 11 of the chamber 10 during the study.

The chamber 10 further comprises ports 31, 32 for supplying cooling water to the locations of the elastomeric sealers. Each port 31, 32, 41, 42 of the chamber 10 may be terminated with a quick-connect coupling, such as one that allows for multiple connections, disconnections, and replacements of system components like a vacuum pump, gas cylinders, or a tank for substances exiting the interior 11 of the chamber 10, or water cooling the chamber near the seals.

The reactor may also be equipped with flow meters and/or infiltration valves to control the amount of substances transported through the inlet port 41 and/or the outlet port 42.

The reactor preferably comprises a heating system and a cooling system to maintain the interior 11 of the chamber 10 at an appropriate temperature during the study. The heating system may include a heater 50such as an electric heater with coils evenly distributed around the walls 11a of the chamber 10, and a cooling jacket for cooling the chamber 10 with liquid nitrogen or its vapors, depending on the desired temperature regime inside the chamber during the study.

The reactor preferably also includes a thermocouple 51 for measuring the temperature, with the measuring element installed inside the interior 11 of the chamber 10, preferably near the geometric center A of the chamber 10 (i.e., the sample location P). Alternatively, the reactor may be equipped with a thermocouple assembly for measuring the temperature of the interior 11 of the chamber 10 at selected points and have a thermocouple integrated with the heater.

The reactor is equipped with at least two electrodes 21 and 22 or 23 and 24 for generating low-temperature plasma within the interior 11 of the chamber 10. Each electrode is installed outside the interior 11 of the chamber 10, and thus each electrode 21 - 24 is physically separated from the interior 11 of the chamber 10 by a wall 11a made of quartz (SiO₂). Electrodes 21 - 24 may, for example, be installed directly against the walls 11a of the chamber 10, on the outside. In this way, electrodes 21 - 24 are not in direct contact with the low-temperature plasma they generate or with the substances (sample, reactants/inerts) residing within the interior 11 of the chamber 10.

The experiment always uses at least two electrodes, e.g. 21 and 22 or 23 and 24, or alternatively 21, 22 and 23 which are connected to an AC power supply with a frequency in the range of tens to hundreds of kHz, preferably in the range of 60 to 100 kHz. The use of an alternating-current power supply makes it possible to manufacture a low-temperature plasma between electrodes 21 and 22 or 23 and 24, directly in the chamber 10, when a reduced pressure between 1·10⁻¹ and 1·10⁻²mbar is maintained within the interior 11 of the chamber 10. The developed reactor design not only makes it possible to generate low-temperature plasma in situ - in the chamber 10, without transporting this plasma, but also ensures the complete elimination of contact of the electrode material with the generated plasma and with all substances residing in the chamber (sample material P, reactants, inerts, etc.). This, in turn, ensures the complete elimination of contamination of the substances residing in the reactor with the electrode material carried by the plasma, thus ensuring the complete absence of influence of the electrode material on the processes taking place within the interior 11 of the chamber 10. Thanks to the developed reactor design, the electrode material 21 - 24 may be selected solely based on the expected electrode characteristics, without the need to verify the reactivity of the electrode material with the reactor feedstock.

The parameters of the interaction of the low-temperature plasma with the matter present in the chamber 10, on the other hand, may be adjusted by the appropriate composition of the gas supplied to the interior 11 of the chamber 10, the pressure in the chamber 10, and changing the amplitude and frequency of the supply voltage.

For example, the reactor may comprise lateral electrodes 21 and 22 in shields 21a, 22a, the first lateral electrode 21 installed in the vicinity of the first transmission window 13a and the second lateral electrode 22 installed in the vicinity of the second transmission window 13b, preferably at an equal distance from the geometric center A of the chamber 10 (as well as the sample location P). The first and second lateral electrodes 21, 22 are preferably connected to an AC power supply, which has outputs galvanically isolated from the system ground. This design makes it possible to generate low-temperature plasma in the sample area and in the openings of the fillers.

Alternatively, the reactor may comprise a pair of axial electrodes 23, 24, installed on opposite sides of the chamber 10, near the geometric center A of the chamber 10 (near the sample area P) - the first axial electrode 23 preferably in the form of a rod, and the second axial electrode 24 preferably in the form of a plate covering the bottom part of the quartz chamber. The first axial electrode 23 is preferably connected to the output of a high-voltage AC power supply, and the second axial electrode 24 is connected to the output of a grounded AC power supply. This design makes it possible to generate low-temperature plasma mainly in the volume around the sample.

### Example

A sample of 20 mg of zeolite with a carbon deposit shaped in the form of a wafer with a diameter of 1.5 cm and mass of 40 mg - as the sample material was placed in a reactor chamber of the design shown in the figure and discussed above. Then, at room temperature, air was removed from inside the chamber, by rotary pump, obtaining a pressure of 5·10⁻¹ mbar. During the low-temperature plasma generation stage, a pressure of 5·10⁻² mbar was maintained in the chamber using two electrodes, maintaining the parameters: p-p voltage 5kV, frequency 100kHz.

During the plasma generation stage and thus the process of removal of carbon fractions from the catalyst surface, transmission-mode spectra were recorded to illustrate the progress of oxidation of carbon compounds: the range of C-H stretching and deformation vibrations of CH₂ and CH₃ as well as CO and CO₂ spectral ranges were monitored. The efficiency of the process was also verified by recording transmission-mode IR spectra of samples with carbon deposit before and after plasma treatment prepared as the KBr-diluted pellets. The tests were performed for zeolites differentiated in acidity, structure and textural properties, as well as different coke deposit content.

While the invention has been described with respect to a limited number of embodiments, it will be appreciated that many variations, modifications and other applications of the invention may be made. Therefore, the claimed invention, as recited in the following claims, is not limited to the embodiments described herein.

## Claims

1. A reactor for performing spectroscopic studies, the reactor comprising:
- a chamber (10) configured to receive a sample (P) to be studied, the chamber (10) comprising:
- an interior (11) surrounded by walls (11a) having transmission windows (13a, 13b) for transmitting electromagnetic radiation through the chamber (10),
- an inlet port (41) for introducing plasma-generating gas into the interior (11) of the chamber (10),
- an outlet port (42) for removing substances from the interior (11) of the chamber (10) and creating a vacuum within the interior (11) of the chamber (10), and
- ports (31, 32) for supplying cooling water to the chamber sealers; and
- electrodes (21 - 24) for generating low-temperature plasma from plasma-generating gas within the interior (11) of the chamber (10);
**characterized in that** the electrodes (21 - 24) are connected to an AC power supply to generate an alternating voltage between the electrodes, wherein each electrode (21 - 24) is separated from the interior (11) of the chamber (10) by a wall (11a) of the chamber (10) made of quartz (SiO₂).

2. The reactor according to claim 1, wherein the electrodes (21 - 24) comprise a pair of lateral electrodes (21, 22) for generating low-temperature plasma, wherein each of the lateral electrodes is installed in a shield (21a, 22a) and connected to an AC power supply via its galvanically isolated outputs.

3. The reactor according to any of previous claims, wherein the electrodes (21 - 24) comprise a pair of axial electrodes (23, 24) for generating a low-temperature plasma, wherein the first axial electrode (23) is a rod and is connected to an AC power supply through its high-voltage output, and the second axial electrode (24) is a plate and is connected to the AC power supply through its grounded output.

4. The reactor according to claim 1, comprising two lateral electrodes (21 - 22) and one axial electrode (23) for generating low-temperature plasma.

5. The reactor according to any of previous claims, wherein the chamber (10) is a tube terminated on two sides by transmission windows (13a, 13b).

6. The reactor according to any of previous claims, wherein the chamber (10) is a tube with a center filler (12b) and side fillers (12a, 12c) in the form of quartz tubes installed coaxially.

7. The reactor according to any of previous claims, further comprising a heating system for heating the interior (11) of the chamber (10), comprising a heater (50) arranged substantially around the chamber (10) and a cooling system for cooling the interior (11) of the chamber (10) in the form of a cooling jacket, which is arranged substantially around the chamber (10) of the reactor, wherein the reactor further comprises a thermocouple (51) for measuring the temperature in the interior (11) of the chamber (10) during its heating and/or cooling.
